# EUROPEAN PATENT APPLICATION

(11) **EP 1 610 544 A1**
(43) Date of publication of application: **28.12.2005**
(21) Application number: 04253796.9
(22) Date of filing: 25.06.2004
(51) Int. Cl.: H04N 5/217

(54) **Readout Circuit for image sensor array**

(71) Applicant: STMicroelectronics Limited, Marlow, Buckinghamshire SL7 1YL (GB)
(72) Inventor: Purcell, Matthew, Edinburgh, EH11 1AX (GB); Hurwitz, J.E.D., Edinburgh, EH13 0JT (GB); Henderson, Robert, Edinburgh, EH10 5HA (GB)
(74) Representative: Cooper, John

(57) **Abstract**

A readout circuit for an image sensing pixel array is disclosed, which is arranged to perform correlated double sampling and comprises readout circuitry which is capable of learning its own internal offset and the offset of both its inputs. In the process of correlated double sampling, one of two sampling capacitors can be made smaller, as the thermal noise it creates is learned. The reduction of size of the appropriate sampling capacitor enables the size of a multiplexer column to be reduced without affecting its noise contribution.

## Description

The present invention relates to a readout circuit, in particular to a readout circuit for an image sensor which is arranged to perform correlated double sampling.

In known solid state image sensors, image sensing pixels are provided in an array, which is arranged in rows and columns, where a column can be a group of pixels that shares a common output bus.

To measure the intensity of light incident on a pixel array, a method called correlated double sampling (CDS) can be used, where a measured signal is compared with a dark signal in order to remove background noise, including that arising from pixel offsets.

Signals from a column of pixels are sent to a column multiplexer, which then provides a column readout circuit with signals which enable it to perform an autozero to eliminate its offset, and to convert the analogue signal read out by the pixel into a digital code.

As the column multiplexer comprises capacitors, the area it covers is not negligible. Capacitors with a large capacitance (and therefore surface area) result in less noise, but they take up a lot of surface area, thus increasing the column height, and are also slower. It is desirable to decrease the size of the capacitors without introducing a degradation of performance.

It will be appreciated that the size of a capacitor can be expressed either in terms of its physical dimensions, or as its capacitance value, which is the capacitance provided under a predetermined set of conditions. As these parameters are intrinsically linked, it will be understood that, in the following discussion, the "size" of a capacitor can be taken to refer to both the physical dimensions and its capacitance value.

According to a first aspect of the present invention, there is provided a readout circuit for an image sensing pixel array, comprising:
a column multiplexer comprising a first sampling capacitor and a second sampling capacitor; and
readout circuitry capable of performing correlated double sampling (CDS) during which the first sampling capacitor is sampled twice; characterised in that:
   the first sampling capacitor has a smaller capacitance than the second sampling capacitor.

According to a second aspect of the present invention, there is provided a method of reading out signals from an image sensing pixel array, comprising the steps of:
sampling a first signal onto a first capacitor and a second capacitor having a smaller capacitance than the first capacitor;
sampling a second signal onto the second capacitor; and
performing correlated double sampling based on the first and second sampled signals.

Preferably, the first sampling capacitor is less than half the size of the second sampling capacitor.

Preferably, the first sampling capacitor has a value of less than 0.5pF and the second sampling capacitor has a value greater than or equal to 1pF.

In a further aspect of the invention, an image sensor is provided which comprises an image sensing pixel array and a readout circuit according to the first aspect. In further aspects, such an image sensor can be incorporated in a digital camera, a mobile phone including a digital camera, and an optical mouse.

The present invention will now be described, by way of example only, with reference to the accompanying drawings, in which;
Fig. 1 illustrates an operation method of a known 3T pixel;
Fig. 2 illustrates a pixel of Fig. 1 with its associated readout circuitry;
Fig. 3 illustrates details of a readout circuit which is shown in general form in Fig. 2;
Fig. 4 illustrates a simplified pixel output circuitry; and
Fig. 5 shows an example of operation of a 4T pixel.

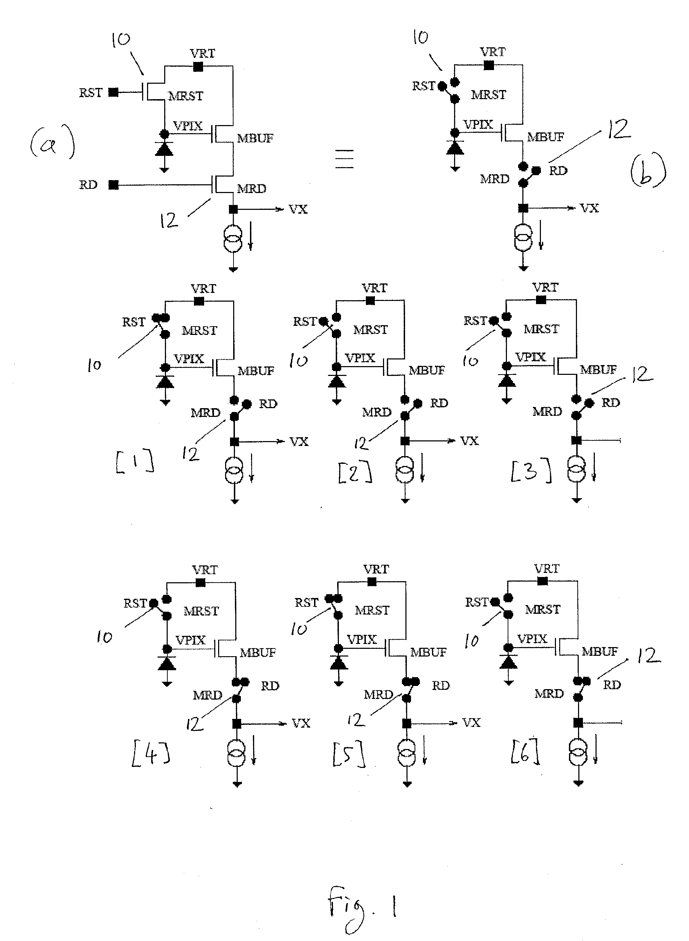

An exemplary operation of a three-transistor (3T) pixel is shown in Fig. 1. In the circuit diagram Fig. 1a, the reset transistor 10 and readout transistor 12 can be thought of as being operatively equivalent to switches, so the circuit diagram Fig. 1a is equivalent to operative diagram Fig. 1b. In a cycle of operation, the pixel goes through steps [1] to [6], as labeled in Fig. 1.
[1] The pixel is reset, by turning on the reset transistor (MRST) 10. VPIX is effectively shorted to VRT.
[2] The pixel is then left to integrate, by turning off MRST 10. Note that VPIX drops suddenly due to the charge injection caused by MRST 10.
[3] Light is collected for a defined integration period.
[4] The readout transistor (MRD) 12 is turned on and the contents of the pixel read out. VPIX is buffered by MBUF onto VX. Let us call this first measurement on VX, VX(SIG).

However, this information VX(SIG) contains all the pixel offsets and the charge injection caused by MRST 10. These offsets then need to be eliminated, as follows:
[5] MRST 10 is switched on.
[6] MRST is switched off again, and a new signal, called VX(BLK) is buffered by MBUF onto VX. This signal gives the pixel offsets and the charge injection.

This operation of a 3T pixel is known *per se*.

The amount of light detected is then evaluated by subtracting VX(BLK) from VX(SIG).

Now that the operation of the 3T pixel has been described, the 3T pixel can be thought of as a block giving out values of either two VX(SIG) or VX(BLK).

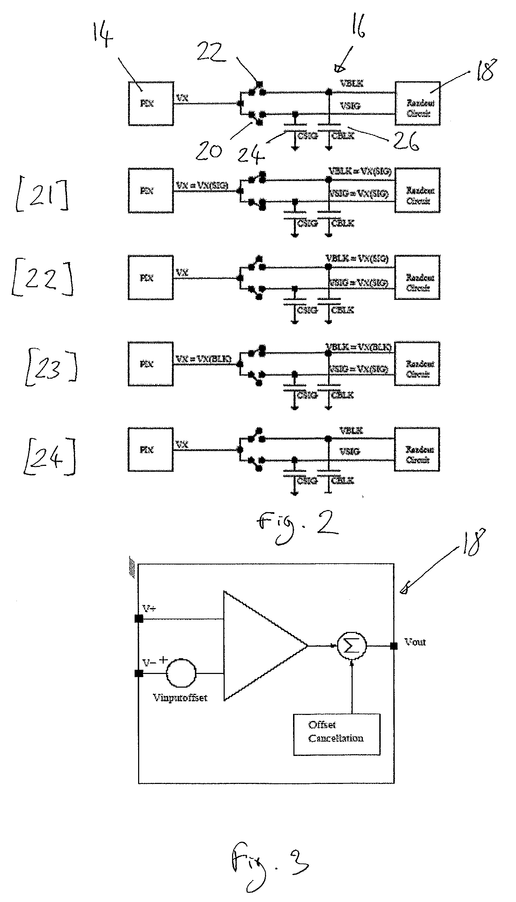

As seen in Fig. 2, a solid state image sensor comprises a pixel 14, a column multiplexer (mux) 16, and a column readout circuit 18. The mux 16 comprises a signal transistor (switch) 20 and dark transistor (switch) 22, which selectively connect the output from the pixel 14 to be stored on either or both of a signal capacitor (CSIG) 24 or a dark capacitor (CBLK) 26.

In Fig. 2, the pixel 14 can of course be any type of pixel, not just a 3T pixel.

The column mux 16 and the column readout circuit 18 work together to provide an offset-free measurement of light, as shown in steps [21] to [24] in Fig. 2. The pixel first gives VX(SIG), which is sampled on CSIG 24 and CBLK 26 (step [21]). A comparator in the column readout circuit 18 then uses both these values to autozero its internal offsets (step [22]). The pixel then gives VX(BLK), which is only sampled onto CBLK (step [23]). Once the second value of VX has been sampled, the column readout circuit 18 determines VX(BLK) - VX(SIG) and converts the result to a digitised signal.

In deciding on the size and capacitance value of CSIG and CBLK, three parameters must be taken into account: Charge injection, thermal (kT/C) noise, and current leakage.

The column readout circuit 18 can either be an A/D converter or an amplifier. It has two modes of operation;
- a learning mode, where the device learns its internal offset alongside the offset of both its inputs. This act of learning offsets is also known as autozeroing.
- A readout mode, where it acts as an A/D or an amplifier. The offset learned during the learning mode is used to eliminate offsets.

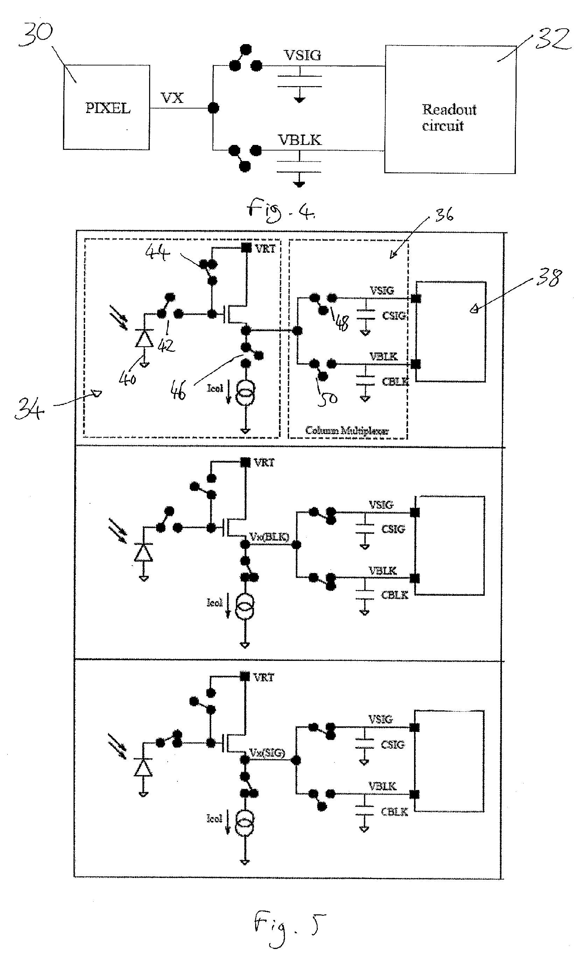

Fig. 3 illustrates the operation of the column readout circuit 18. Systems using such an architecture are described in SXGA Pinned Photodiode CMOS Image Sensor in 0.35 um Technology; Findlater K, Henderson R, Baxter D, Hurwitz J.E.D., Grant L, Cazaux Y, Roy F, Herault D, Marcellier Y, Solid State Circuits Conference 2003, Digest of Technical Papers ISSCC 2003, IEEE International 2003 pp. 218-489 v 1.1.

We will now consider an exemplary operation of the 3T pixel, the column multiplexer and the readout circuit including all the three noise parameters of the capacitors CSIG and CBLK.

VX(SIG) is first outputted by the pixel. It is sampled
onto both capacitors CSIG and CBLK to ensure that the readout circuit can be autozeroed. However thermal noise and charge injection affect the values sampled, hence:
- VSIG = VX(SIG) + thermal noise 1 + charge injection(sig)
- VBLK = VX(SIG) + thermal noise 2 + charge injection(blk)

The readout circuit performs its autozero using VSIG and VBLK, hence:
- autozero_offset = VSIG - VBLK = thermal noise 1 + charge injection(sig) - thermal noise 2 - charge injection(blk)

A second sample VX(BLK) is provided by the pixel, but is only transferred onto CBLK. Due to leakage, the value on CSIG has lost a fraction A of its nominal charge, hence:
- VSIG = (1-A) x [VX(SIG) + thermal noise 1 + charge injection(sig)]
- VBLK = VX(BLK) + thermal noise 3 + charge injection(blk)

The readout circuit adds its stored value onto VSIG - VBLK, giving:
- VBLK - VSIG + autozero_offset = VX(BLK) + thermal noise 3 + charge injection(blk) - (1-A) x [VX(SIG) + thermal noise 1 + charge injection(sig)] + thermal noise 1 + charge injection(sig) - thermal noise 2 - charge injection(blk)
- VBLK - VSIG = VX(BLK) - (1-A) x VX(SIG) + A x thermal noise 1 + A x charge injection(sig) + thermal noise 3 - thermal noise 2

Due to the fact that the VX(SIG) and VX(BLK) are supplied in quick succession, the effect of leakage is minimised, hence the above equation can be rewritten as:
- VBLK - VSIG = VX(BLK) - VX(SIG) + thermal noise 3 - thermal noise 2

Thermal noise 3 is the thermal noise of the VX(BLK) signal provided by the pixel, which is read on to CBLK only, and thermal noise 2 is the thermal noise of the VX(SIG) signal provided by the pixel initially, as added to the CBLK capacitor only. Therefore it can be seen that the thermal noise caused by the sample and hold capacitors in the column multiplexers, seen at the output of the readout circuit only comes from the CBLK sample/hold capacitor.

It will be appreciated that in an alternative implementation, VX(BLK) could be the first output from the pixel, which is sampled on to both capacitors CSIG and CBLK. Therefore, following calculations similar to those above, the thermal noise only comes from the CSIG S/H capacitor, and so the size of CBLK can be reduced.

Thermal noise form the sampling capacitors must be kept very low to ensure that it does not affect the image. However as shown above, the dominant source of thermal noise is the black capacitor. Therefore, the sizing of CBLK must take into account thermal noise, but the sizing of CSIG only has to take into account leakage. This realisation permits us to reduce the size of CSIG.

The appropriate capacitor can be reduced in size as much as required. The minimum capacitance threshold is the capacitance required to store the charge injection.

As an example, in a prior art column mux where both CSIG and CBLK have values of 1pF, the size of one of the capacitors can be reduced to 0.4pF. It will be appreciated that these values are for illustrative purposes only, and that the scope of the invention is not limited to these specific values.

The sizing of the sampling capacitors also has an effect on the noise contribution of the pixel. The noise of
the pixel reduces as the capacitance on its output increases. During the first sample the pixel sees both the capacitors CSIG and CBLK. However, during the second sample it only sees CBLK. If CSIG is made smaller
as it contributes little to the sampling thermal noise, the space left can be used to increase CBLK to improve
pixel noise and sampling noise.

As an example, in a prior art column mux where both CSIG and CBLK have values of 1pF, the size of one of the capacitors can be reduced to 0.4pF while the size of the other could be increased to more than 1pF. It will be appreciated that these values are for illustrative purposes only, and that the scope of the invention is not limited to these specific values.

Fig. 4 shows a simplified view of a system comprising a pixel 30 which uses use CDS with a readout circuit 32 with an autozero scheme which is capable of learning its own internal offset and the offset between both of its inputs.

To perform CDS the pixel outputs two values at two different times - VBLK (containing information of the pixel's offsets ) and VSIG (containing the pixel's offset and the intensity of light). Each value is stored onto a capacitor.

Depending on the architecture of the pixel and the A/D, either VSIG or VBLK are used for autozero. For purposes of illustration let us assume that a VSIG is outputted first and used to autozero the A/D. This would lead the autozero offset to contain information on the noise on VSIG.

When CDS is performed, the noise on VSIG is cancelled by the autozero offset. This property allows us to
tolerate more noise on VSIG, knowing that it will be cancelled out. One of the sources of noise is the thermal noise caused by the storage capacitor on which VSIG is stored. As it is being cancelled by autozeroing, this capacitor can be made smaller.

On the other hand, if VBLK is used for autozero referencing, the capacitor holding VBLK can be made smaller.

Fig. 5 shows a further embodiment of the invention, in which a column mux 36 is illustrated with a 4T pixel 34 and a column ADC 38. The 4T pixel comprises a photodiode 40 with associated transfer gate 42, reset switch 44 and read switch 46. The column multiplexer comprises a SIG switch 48 and a BLK switch 50. To perform the autozeroing of the ADC, the 4T pixel is reset and both CSIG and CBLK are charged up to Vx(blk). To convert the intensity of light captured by the pixel, the transfer gate is turned on, and Vx(sig) is placed onto CSIG. The ADC can then calculate Vx(blk) - Vx(sig) to get an offset free digital code. The capacitors in the mux are sized so their thermal noise contribution is kept to a minimum. However the effect of the thermal noise contribution of CSIG and CBLK is different. Due to the fact that the thermal noise on CBLK is sampled twice for autozeroing and the making of the image, its thermal noise contribution is effectively cancelled, thus it can be kept small.

Therefore it can be said that when using a readout circuit which is capable of learning its own offsets and its input offsets, one of the sample/hold capacitors can be reduced in size as the thermal noise it creates is learned.

This therefore means that the height of a column multiplexer can be reduced without affecting its noise contribution. The reduction in height helps reduce the physical space required in an image sensing array for the readout circuit, and so helps in the construction of a compact image sensor.

Thus, the invention is applicable to a broad range of devices. A readout circuit according to the invention can be incorporated in a wide range of image sensors, which may be incorporated in such devices as a digital camera, a mobile phone incorporating a digital camera, and an optical mouse. It will be appreciated that standard techniques may be employed by the man skilled in the art in order to implement the invention in these and other ways.

Improvements and modifications may be incorporated to the above without departing from the scope of the invention.

## Claims

1. A readout circuit for an image sensing pixel array, comprising:
a column multiplexer comprising a first sampling capacitor and a second sampling capacitor; and
readout circuitry capable of performing correlated double sampling (CDS) during which the second sampling capacitor is sampled twice;
**characterised in that**:
the second sampling capacitor has a smaller capacitance than the first sampling capacitor.

2. The readout circuit of claim 1, wherein the second sampling capacitor is less than half the size of the first sampling capacitor.

3. The readout circuit of claim 1 or claim 2, wherein the second sampling capacitor has a value of less than 0.5pF and the first sampling capacitor has a value greater than or equal to 1pF.

4. An image sensor comprising an image sensing pixel array and a readout circuit according to any preceding claim.

5. A digital camera comprising an image sensor comprising an image sensing pixel array and a readout circuit, said readout circuit comprising:
a column multiplexer comprising a first sampling capacitor and a second sampling capacitor; and
readout circuitry capable of performing correlated double sampling (CDS) during which the second sampling capacitor is sampled twice;
**characterised in that**:
the second sampling capacitor has a smaller capacitance than the first sampling capacitor.

6. A mobile telephone comprising the digital camera of claim 5.

7. An optical mouse comprising an image sensor comprising an image sensing pixel array and a readout circuit, said readout circuit comprising:
a column multiplexer comprising a first sampling capacitor and a second sampling capacitor; and
readout circuitry capable of performing correlated double sampling (CDS) during which the second sampling capacitor is sampled twice;
**characterised in that**:
the second sampling capacitor has a smaller capacitance than the first sampling capacitor.

8. A method of reading out signals from an image sensing pixel array, comprising the steps of:
sampling a first signal onto a first capacitor and a second capacitor having a smaller capacitance than the first capacitor;
sampling a second signal onto the second capacitor; and
performing correlated double sampling based on the first and second sampled signals.

9. The method of claim 8, wherein the first capacitor is less than half the size of the second capacitor.

10. The method of claim 9, wherein the first capacitor has a value of less than 0.5pF and the first sampling capacitor has a value greater than or equal to 1pF.
